(19) Europäisches Patentamt
European Patent Office
Office européen des brevets

(11) **EP 1 105 768 B1**

(12) **EUROPEAN PATENT SPECIFICATION**

(45) Date of publication and mention
of the grant of the patent:
**02.07.2014 Bulletin 2014/27**

(51) Int Cl.:
***G02C 7/02*** *(2006.01)*

(21) Application number: **99923318.2**

(22) Date of filing: **26.05.1999**

(86) International application number:
**PCT/AU1999/000399**

(87) International publication number:
**WO 2000/004414 (27.01.2000 Gazette 2000/04)**

(54) **OPTICAL LENS**

OPTISCHE LINSE

LENTILLE OPTIQUE

(84) Designated Contracting States:
**AT BE CH CY DE DK ES FI FR GB GR IE IT LI LU
MC NL PT SE**

(30) Priority: **17.07.1998 AU PP474898
30.12.1998 US 223006**

(43) Date of publication of application:
**13.06.2001 Bulletin 2001/24**

(73) Proprietor: **Carl Zeiss Vision Australia Holdings
Ltd.
Lonsdale, SA 5160 (AU)**

(72) Inventors:
• **MORRIS, Michael, Alan
Santa Rosa, CA 95401 (US)**
• **PERROT, Colin, Maurice
Mount Barker, S.A. 5251 (AU)**
• **EDWARDS, Simon, J.
St. Peters, S.A. 5069 (AU)**
• **SPRATT, Ray, Steven
Petaluma, CA 94954 (US)**

(74) Representative: **Stevens, Jason Paul
Dehns
St Bride's House
10 Salisbury Square
London
EC4Y 8JD (GB)**

(56) References cited:
**EP-A- 0 446 698      EP-A- 0 446 698
WO-A-97/21139        GB-A- 680 400
US-A- 1 910 466      US-A- 2 543 949
US-A- 3 960 442      US-A- 4 289 387
US-A- 5 050 979      US-A- 5 648 832**

**Description**

**Field of the invention**

The present invention relates to improved ophthalmic lens elements and eyewear, including prescription lenses, spectacles, sunglasses, safety glasses and frames therefor.

**Background**

Most conventional prescription lenses have relatively flat base curves. Such lenses provide a limited field of view due to peripheral distortion and/or physical size limitations. Their relatively flat shapes limit the amount of eye protection afforded by the lenses, particularly near the temples.

Wrap-around eyewear has been developed in an attempt to provide wider fields of view and greater eye protection. Wrap-around design also permits different and sometimes striking overall styles for the eyewear. However, wrap-around eyewear is typically non-prescription. These products also typically have flat base curves between 6 and 10 D. Wrap (and sometimes rake) are achieved by rotating and/or translating the optical axes of the lens in the as worn orientation. See e.g. United States Patent No. 1,741,536 to Rayton; United States Patent No. 5,689,323 to Houston et al. This causes the line of sight of the wearer to deviate from the optical axis, and optical performance is often significantly degraded. Peripheral vision is typically poor.

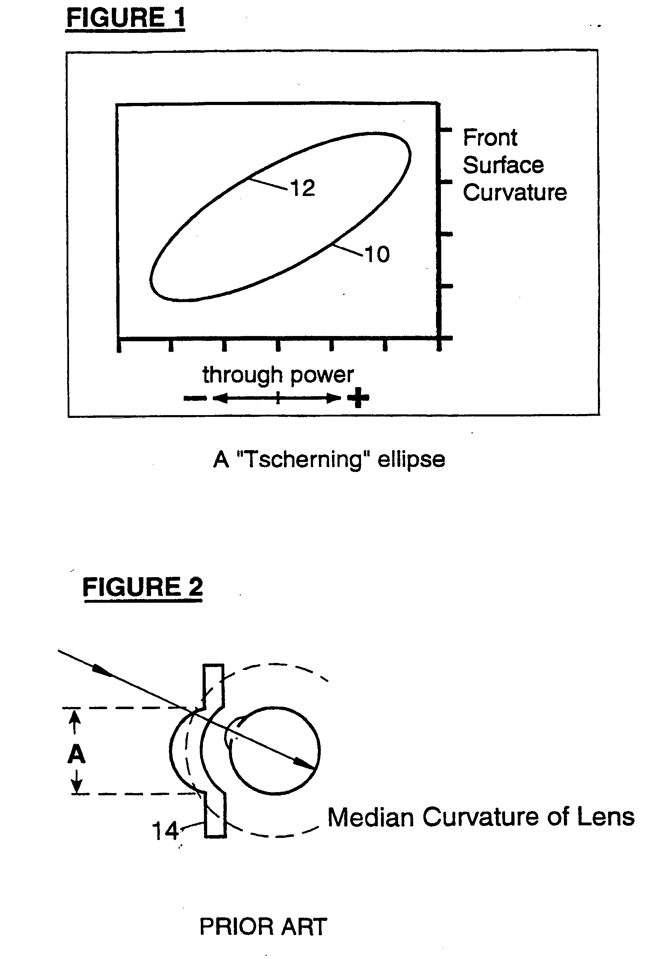

Early in the history of ophthalmic science, steeply curved prescription lenses had been described, although not as vehicles for providing greater field of view or eye protection. A relationship between curvature and through power is shown in the so-called "Tscherning's" ellipse. First described nearly 100 years ago, it attempts to identify combinations of lens curvature and lens power which have minimum aberration. The general form of the Tscheming ellipse is shown in Figure 1. Figure 1 is given for assumed typical values for lens parameters such as index of refraction, vertex distance, lens thickness, etc. The Tscheming ellipse retains its ellipsoid shape and inclined orientation for various assumed values of lens parameters, while the precise location of points on the ellipse may change. The ellipse of Figure 1 is derived from the corrected von Rohr equation (after Morgan) solved for point-focal (zero astigmatism) distance vision.

The lower portion 10 of the ellipse is the so-called "Ostwalt section" which describes a selection of relatively flat front surfaces for lens powers typically used in conventional prescription ophthalmic lenses. The upper portion 12 of the curve, called the "Wollaston section", describes much more steeply curved lenses which have never gained acceptance as lens forms, although there are historical instances of attempts to make such objects (e. g. Wollaston himself). See, M. Jalie, The Principles of Ophthalmic Lenses p. 464 (4th Ed. London, 1994). Because of difficulties in fabrication, such early lenses were probably of small aperture and, consequently, perhaps, regarded as unacceptable for cosmetic reasons and because of their limited field of view. Other steeply curved lenses are disclosed In US 2543949.

Modern lenses with steeply curved front spherical surfaces have been made for the treatment of aphakia (absence of the natural lens of the eye as in the case of surgical removal of the lens). The general form of these lenses is shown in Figure 2. See M. Jalle at p. 151. Such lenses serve essentially as an eye lens replacement and are characterized by great thickness and high plus power (greater than + 5 D and typically + 12 D or greater). The aperture A of these lenses are of small size e. g. 26 or 28 mm in diameter. Typically such aphakic lenses have a piano radial flange 14.

Today, the vast majority of conventional prescription lenses are relatively flat, single vision, Ostwalt section, meniscus lenses which are glazed like window panes Into flat outline spectacle frames.

Applicants have studied the properties of steeply curved lenses and considered series of lenses having commonly prescribed plus or minus through powers. Applicants observed that such lenses could, In principle, provide a wide field of view and eye protection. However, certain problems would interfere with practical implementation of such wide-field lens. Generally there are problems of fabrication and distortion, and problems of producing a range of common plus or minus power prescriptions with or without available common astigmatism correction or "cyl" prescriptions.

A more subtle problem is presented by the wide range of front surface powers which would be required to provide a range of common prescription powers. For the lens assumptions of Figure 1, for example, the Wollaston section would be understood to teach a variation in front surface power of from about 15 D to about 20 D for a product line through-power range of from +5 D to -8 D. This corresponds to a variation in radius of front surface curvature of from about 29 to about 39 mm, which represents a large variation in overall size and shape for lenses large enough to provide a wide field of view. Such lens cannot be fitted like panes into a single frame size, but, in fact, each prescription itself would dictate its own specialized frame size and style. While such unique styles have value, they are incompatible with providing mass-marketed eyewear with a consistent appearance.

It is an object of the present invention to overcome, or at least alleviate, one or more of the difficulties and deficiencies of the prior art

## Summary of the invention

Generally, the present invention relates to eyewear and ophthalmic lens elements therefor. Ophthalmic lens elements may include, according to context, finished or edged ophthalmic lenses, semi-finished lenses, lens blanks or moulds therefor. Also included are wafers for forming laminated lenses or lens blanks.

Accordingly in a first aspect of the present invention there is provided a series of ophthalmic lens elements, each lens element having

a spherical front surface which Is approximately concentric with the centroid of rotation of the eye in the as worn position; approximately the same radius of curvature which Is essentially a single value within about ±1 mm for the series and selected In the range 25 to 50 mm; and wherein the back surfaces of the lens elements in the series are configured to provide, in conjunction with the front spherical surface, various commonly prescribed through powers and astigmatic correction;

characterized in that the back surface lies between a barrel toroid and a donut toroid, both having the same principle meridia and the same power along said principal meridia.

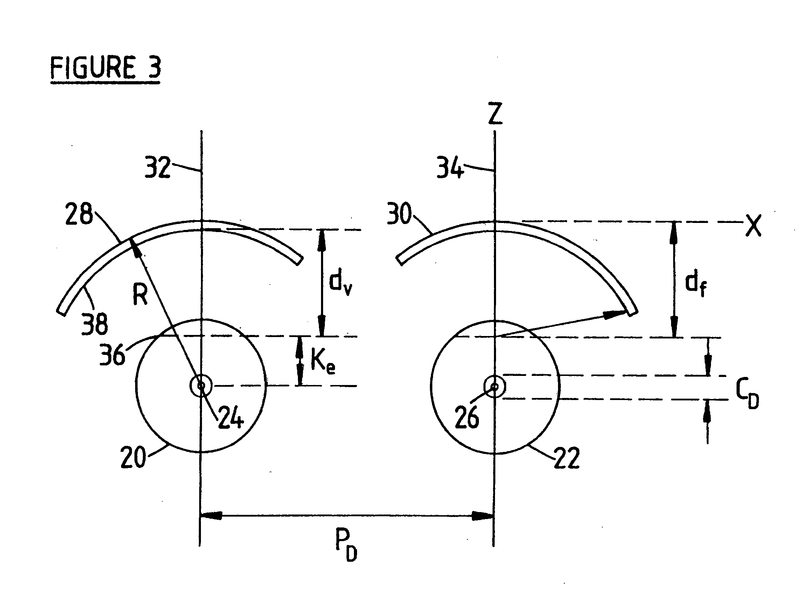

Figure 3 illustrates some geometric aspects of steeply curved, concentric lenses. Figure 3 shows a horizontal cross-section of left and right eyes (20 and 22 respectively). Each eye is shown having a centroid of rotation 24 and 26. The centroid of rotation may be understood as a volume within the eyeball, having a diameter $C_D$ of roughly 1-2 mm, about which the eye appears to rotate as the direction of gaze varies. As shown in Figure 3, left and right steeply curved lenses 28 and 30 are positioned about the eye. In the Figure, the optical axis of each lens is co-linear with the line of sight of each eye and represented by the lines 32 and 34 for each eye. These lines also represent the z axis of coordinate systems later used in the text to describe certain lens surfaces (the x-y plane being normal to the plane of the Figure).

The lenses 28 and 30 are generally describable as spherical or spherically based. Preferably, the front surface is spherical, having a fixed radius of less than 35 mm for all prescription values in the series. In an alternative, the lens is best described as having a spherical back, as containing a reference sphere or as lying within a defined spherical shell. In each case the radius of the reference sphere or shell and the location of the lens as worn is such that the centre of the reference sphere or shell lies close to or within the centroid of rotation of the eye. The case in which the front surface is a sphere of radius R centred on the centroid of rotation of the left eye is illustrated for the left eye in Figure 3.

The selection of a spherical base of a given radius centred on or near the centroid of rotation of the eye, places a constraint on the vertex distance d, Illustrated for the left eye of Figure 3 as the distance between the plane of the pupil 36 and the back surface 38 of the lens. Front surface radius and back surface shape, in conjunction with other design parameters such as the lens thickness and the index of refraction of the lens material determines the optical properties of the lens as described in detail below.

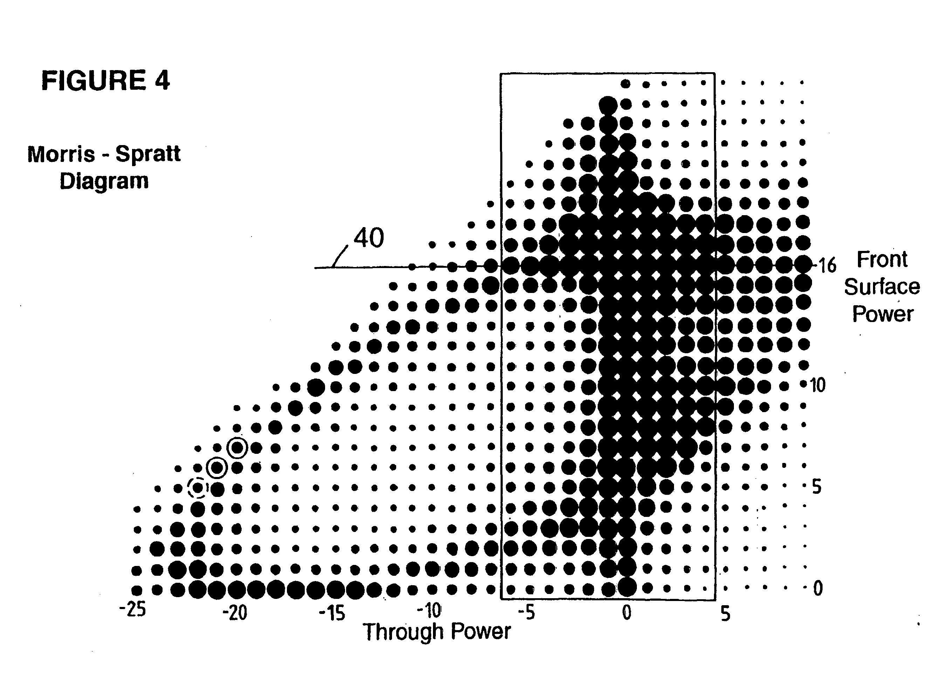

Applicants have found that this lens design may be analyzed and described by a data array of a type illustrated In Figure 4. The diagram is called a "Morris-Spratt" diagram after two of the inventors.

In the diagram, each dot is at the centre of a theoretical ray-trace plot from a lens having properties of the grid point at the centre of the dot. The "y" axis on the right gives the power of the front surface of the lens in dioptres (normalized for an index of refraction of n = 1. 530). The "x" axis at the bottom shows the through power of the lens at Its centre. This corresponds to the plus or minus power prescription of the lens. For this Figure it is assumed that each lens is made of polycarbonate (n = 1.586) and has a centre thickness of 1.8 mm in minus power lenses, and a centre thickness in plus lenses determined individually for each prescription so that the minimum overall lens thickness is 1 mm in the periphery of a 58 mm diameter lens blank. Each lens is positioned relative to the eye such that the front surface is 33.1 mm from the centroid of rotation of the eye, which is concentric for lenses which have a front surface power of 16.0 dioptres.

At each individual grid point appears a ray trace result for eye rotation angles up to 40 degrees. The dark area at each grid point represents the region of each lens that has less than 0. 125 diopters of RMS power error relative to the prescription and allowing up to 0.375 diopters of accommodation. RMS power error is defined mathematically below. This criterion is believed to be a good indicator of lens performance.

The fully filled-in circles in Figure 4 represent lenses with less than 0.125 diopters of RMS power error over 40 degrees of eye rotation in any direction. For dots with rings around them, the RMS power error rises above 0.125 diopters for some intermediate eye rotation angles then drops below that threshold again for some small angular region.

The elliptical outline of the locally largest dots corresponds roughly to a Tcherning's ellipse generated for the special case of the lens parameters selected by applicants. Conventional wisdom dictates that the front surfaces of spherical lenses (lenses with spherical surfaces on the front and back) must follow Tcherning's ellipse to produce high quality lenses. However, the Morris-Spratt diagram illustrates that for appropriate selection of lens parameters there is a nearly horizontal region in this diagram where it is possible to produce excellent lenses. It is known that plano spherical lenses with high quality optics can be fabricated extending over a wide range of front surface curvatures (a fact that is indicated by the vertical line of large dots near zero through power). Many such lenses are available in the market today. The novel idea that is illustrated in the Morris-Spratt diagram is that is it also possible through appropriate selection of lens parameters to fabricate high quality spherical lenses over a wide range of prescriptions using a single, steeply curved front surface or spherical reference surface or shell. Notice that the low RMS power error regions for lenses using a front surface power of 16 diopters (grid points on line 40) have wide angular extent (nearly full or full circles) over a range of at least -6 to +4 diopters. Over 95 % of all prescriptions fall within this range. Therefore, it is possible to produce high quality ophthalmic spherical lenses over a wide range of useful prescriptions using a single, appropriately selected high power front surface or base curve. Moreover, as made clear by Figure 4, some small deviations from the single power or from exact concentricity may be made while providing good lens quality and a lens shape sufficiently consistent to use the same frame style.

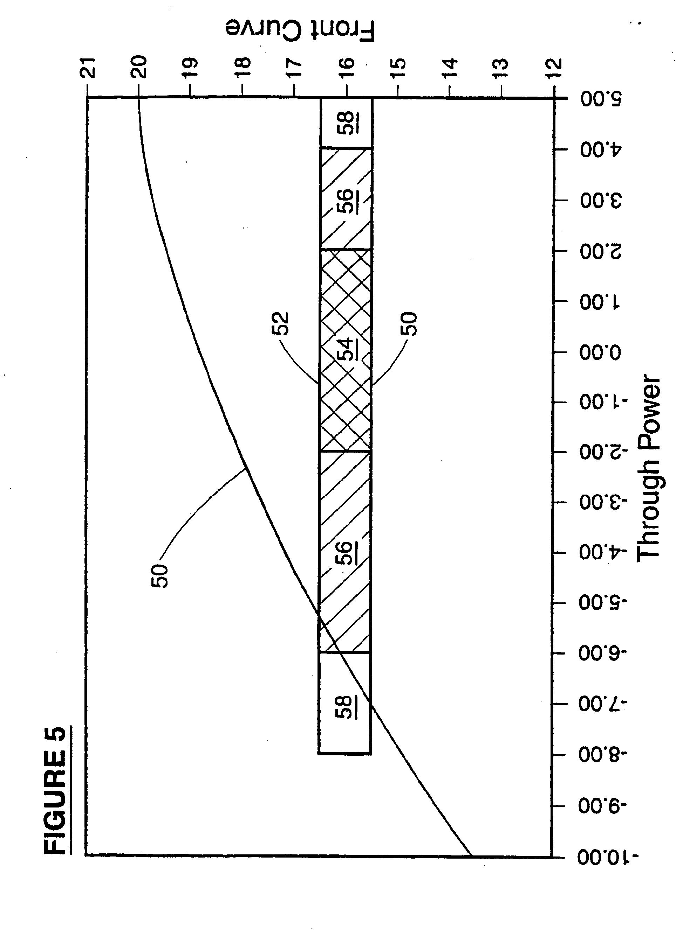

Figure 5 illustrates a series of good optical quality lenses of a preferred aspect of the present invention. In this embodiment, the front surface is selected to be about 16 D about 1/2 D. This range lies between lines horizontal 50 and 52. Particularly preferred embodiments provide series of lenses having prescription in the range -2 D to + 2 D (area 54), -6 D to +4 D (areas 54 and 56), or -8 D to +5 D (areas 54, 56 and 58).

For comparison purposes, a portion of the Wollaston section of the Tscheming ellipse 60 for this special case has been overlaid on the diagram of Figure 5. The Figure shows that the front curve and through power ranges represented in the horizontal blocks are inconsistent with the Tscherning ellipse teaching which would indicate a 5 D variation In the front surface for -8 D to +5 D through power and a far steeper curvature in the centre of the through power range.

Preferably the lens elements have through powers of from at least approximately +4 D to -6 D.

Advantageously, the series of lens elements are provided with the appropriate prescribed power and cyl correction. In the embodiment where the front surface Is spherical, the back surface Is configured to provide the appropriate through power and cyl correction. In a preferred embodiment, a series of lens elements would Include through power through the abovementioned ranges in 1/4 D increments. Stock lens elements of each power would be provided with each of various common astigmatism prescriptions, for example, 0 D to -2 D in 1/4 D increments. It will be understood that because of the spherical symmetry of the lens element, the angle of the cyl correction can be selected by appropriate rotation of the lens element during edging and glazing.

Conventional astigmatism correction is based on toroid surfaces often described in terms of principal meridia, i.e, orthogonal meridia centred at the optical axis of the lens, representing the locus of maximum and minimum curvatures. Barrel toroids and donut toroids have both been used to provide cyl corrections. As described below, applicants have developed novel astigmatism correcting surfaces for steeply curved lenses, which surfaces can be described as lying between a barrel toroid and donut toroid each having the same principal meridia and the same power along the principal meridia. Two such surfaces are the "all-circular meridia" surface and the "averaged-toroids" surface described in detail below.

Preferably, the surface astigmatism of said back surface at any point off the principal meridia is less than the larger of the surface astigmatism of the barrel toroid or the donut toroid at the same point.

Alternatively the back surface is defined such that the surface height Z of the lens element from a fronto-parallel plane at any point on the back surface is a linear combination of the height of a barrel toroid, $Z_B$, and the height of the donut toroid $Z_D$, Z being bounded by the values of $Z_B$ and $Z_D$.

In a further preferred aspect the cross-section of the back surface of the lens element along any meridian is circular.

Preferably the curvature of each circular meridian is equal to the instantaneous curvature of a corresponding meridian at the centre of a conventional torus given by the prescription.

The back surface astigmatism correction is given by the surface height function z (r, θ) where

$$z(r,\theta) = R(\theta) - \sqrt{R(\theta)^2 - r^2}$$

and where

$$R(\theta) = \frac{R(0)R(90)}{R(0)\sin^2\theta + R(90)\cos^2\theta}$$

is the radius of curvature along the θ meridian, $r = \sqrt{x^2 + y^2}$,

and the values R(0) and R(90) are the radii of curvature along the principle meridia;

alternatively the back surface, together with the front surface, provides a non-zero through power and the back surface is defined by the equation:

$$z = \sum_{k=0,1,\ldots}^{n} \sum_{j=0,1,\ldots}^{k} C_{k-j,j}\, x^{k-j}\, y^{j}$$

The shape of lenses of the present invention will now be described. The term "steep cunrature" is used in this context to describe the overall shape of the lens or reference sphere or shell. In particular examples the curvature may be quantified as an average radius of curvature of a surface or of a spherical shell lying inside or outside the lens or containing a surface of the lens.

Lenses of the present invention are also characterized in general shape by their large angular field of view, often expressed as an angle between the optioal axis and the temporal-most or nasal-most extremes of the edges. In accordance with preferred embodiments of the present invention, the lens subtends an angle centered on the center of a front spherical surface, the angle being greater than 80° and in preferred embodiments greater than 100°. It will be understood that such angles are indications of the field of view of the lens provided of course that the lens is optically usable in these peripheral regions.

The unique topological shape of the lenses of the present invention may also be characterized by sagittal depth or "hollow" depth, which are generally a measure of the three-dimensionality of the lens and lens edge. These depths relate to the distance between the fronto-parallel plane of the lens and the temporal most edge point, as described below. In accordance with preferred embodiments of the present invention, there are provided lenses with an average radius of no more than 50 mm centered on the centroid of rotation of the eye and having a hollow depth of at least 8 mm. In a particularly preferred embodiment the radius of the front surface is about 33 mm $\pm$ about 1 mm and the hollow depth is at least 10 mm.

In a further aspect of the present invention, there is provided an ophthalmic lens element including a spherical front surface which is approximately concentric with the centre of rotation of the eye and having a base curve of 16 D $\pm$ approximately 1/2 D and exhibiting relatively low RMS power error over approximately 40 degrees of eye rotation.

Preferably the lens element is such that for foveal vision the RMS Power Error is less than 3/8 D for eye rotation angles less than 30°.

The present invention also includes methods for providing prescription eyewear. Accordingly, in a still further aspect of the present invention there is provided a method of providing prescription eyewear including the steps of providing a lens element having

a front surface which lies within a spherical shell of a thickness no greater than approximately 2 mm and a radius of no more than approximately 35 mm; and

a rear surface configured so that the lens element has a prescribed through power and a prescribed astigmatism correction; and

positioning the lens element on the wearer so that the center of the spherical shell lies approximately at the centrold of rotation of the eye.

Preferably the lens element is positioned by glazing the lens element into a frame having a standard aperture corresponding to a radius of a spherical shell common to a series of lens elements having different through power, including the prescribed through power.

More preferably the lens element is provided with a back surface which has a circular cross section along any meridian passing through its origin, and whose curvatures along those meridia are identical to the central curvatures of the equivalent conventional toric.

The present invention also includes specially designed spectacle frames. In a preferred embodiment there is provided a spectacle frame suitable for use with a series of ophthalmic lenses, each having a spherical surface of a single radius between 25 and 35 mm, and a second surface selected to provide in conjunction with the spherical surface various common prescriptions. The frame may be adapted to support left and right lenses on the wearer so that the centres of the spherical surfaces are located at or near the centrolds of rotation of the left and right eyes, respectively. The spectacle frame may include temple pieces and rim portions for engaging the left and right lenses. The rim portion engaging each lens may be formed in the shape of a closed curve lying on a reference sphere having a radius approximately equal to the radius of said spherical surface. In such spectacle frames, the nasal-most point and temporal-most point of the closed curve may subtend an arc of greater than 90° with a vertex at the center of the spherical surface.

The spectacle frames may include a left temple piece, a right temple piece and a nose bridge. In a preferred embodiment the nose bridge is of adjustable length to allow horizontal adjustment of the lens separation to position the centers of the spherical surfaces at the centrolds of the eyes. In other embodiments rimless frames are provided with hinges for supporting temple pieces, the hinges being adapted for direct attachment to the reference spherical surface at the temporal edges of the respective lens.

The foregoing is intended only as a summary of the invention, the scope of the invention being determined by the literal language of the claim and equivalents thereof.

## Brief description of the drawings

Figure 1 is a drawing of a Tscherning ellipse;
Figure 2 is a cross-sectional view of a prior art, high plus power "rotoid" lens;
Figure 3 Is a cross-sectional top view of a pair of human eyes, and lenses;
Figure 4 is a Morris-Spratt diagram illustrating properties of series of lens elements;
Figure 5 Is a diagram of front curves and through power ranges, with a portion of the Tscherning ellipse for this special case, overlaid thereon;
Figure 6 (a), (b) and (c), 7,8 and 9 are schematic diagrams illustrating various aspects of the geometry of lens elements;
Figure 10 presents a comparison of fields of view for an example of a 6 base conventional lens and a steeply curved lens and lens element;
Figures 11 (a) and (b) illustrate surface astigmatism of a conventional donut and a barrel toric when imposed on a steeply curved spherical lens having principal meridia shown in Figure 11(c);
Figures 12(a)-(d) are graphs of tangential and sagittal surface power as a function of a polar angle for the donut and barrel torics of Figure 11;
Figures 13 and 14 are graphs of tangential and sagittal surface power as a function of polar angle for the all-circular meridia and the averaged toric surfaces of the present invention;
Figures 15 and 16 are contour plots of surface astigmatism for lens element surfaces employing the teachings of the present invention;
Figures 17(a), (b) and (c) illustrate an object grid and images thereof;
Figure 18 is a cross-sectional side view of a mould which may be used to make lens elements of embodiments of the present invention;
Figure 19 contains plots of RMS power error and distortion and a ray-traced grid calculated for three conventional low base lens and three steeply curved lens elements in accordance with the present invention;
Figure 20 contain plots of RMS power error and distortion and a ray-traced grid calculated for a steeply curved lens with a conventional toric back and for an all-circular meridia back;
Figures 21 and 22 are contour plots comparing a conventional 6 D base progressive lens, with a 16 D base progressive lens in accordance with the present invention;
Figures 23, 24, 25 and 25(a) illustrate various aspects of the appearance, edging, and glazing of lens elements of the present invention and spectacle frames for use therewith.

## Detailed description of drawings and examples

### Outline

I Basic Lens Geometry.
II Correction Of Astigmatism.
III Reduction Of Magnification Effects And Distortion.
IV Lens Manufacture.
V Calculated Performance Of Lens Design Examples.
VI Glazed Lenses And Spectacle Frames.

### I Basic Lens Geometry

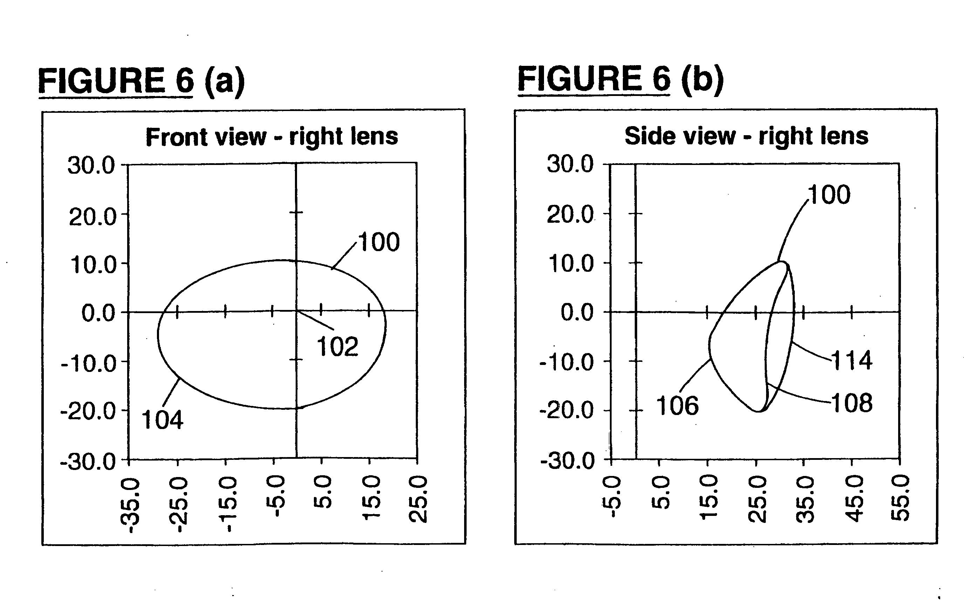

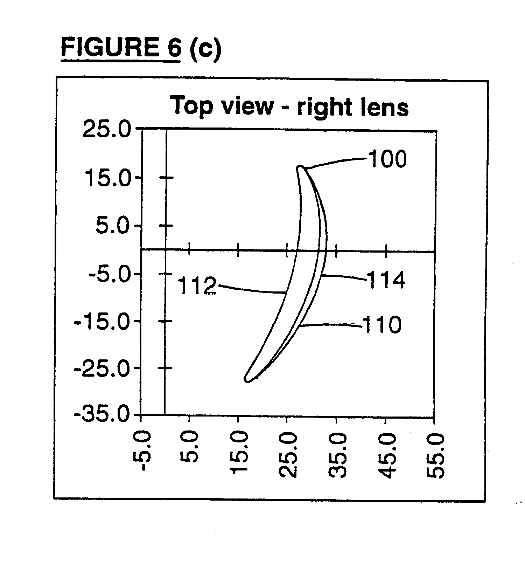

The basic geometry of lenses made in accordance with the present invention will first be discussed. Figures 6(a), 6(b) and 6(c) Illustrate, respectively, front, side and top views of an edged lens 100. The origin 102, in Figure 6(a), is the location of the optical centre of the lens and the design location of the centre of the pupil when worn. The outline 104 of the edged lens is indicated from a front view perspective in Figure 6(a). In Figure 6(b) the temporal edge 106 and nasal edge 108 of the lens are shown. In Figure 6(c) the upper edge 110 and lower edge 112 of the lens are shown. In the lens embodiment of Figure 6, the front surface of the lens is a steep spherical curve, the right-most extent of which is indicated by the line 114.

The steeply spherical curvature of embodiments of the present invention can be designed into the lens in a variety of ways. In the preferred embodiment, discussed above, the front surface of the lens elements Is a single radius sphere centred at or near the centroid of rotation of the eye. Alternatively, the back surface of the series of lens elements may be a constant steeply spherical surface and centred at or near the centroid of rotation. In these embodiments the other surface is of variable curvature, the curvature being selected to provide at least the appropriate through power for the wearer. For example, if a 16 D spherical front surface is selected for the lens element series, a rear surface with a curvature of 20 D on its major meridian and 18 D on its minor meridian may be used to provide a 4 D through power with a -2 D cyl. Alternatively, if the constant radius surface of the lens element is placed on the back surface, then the corresponding surface selected for the particular prescription may be placed on the front surface.

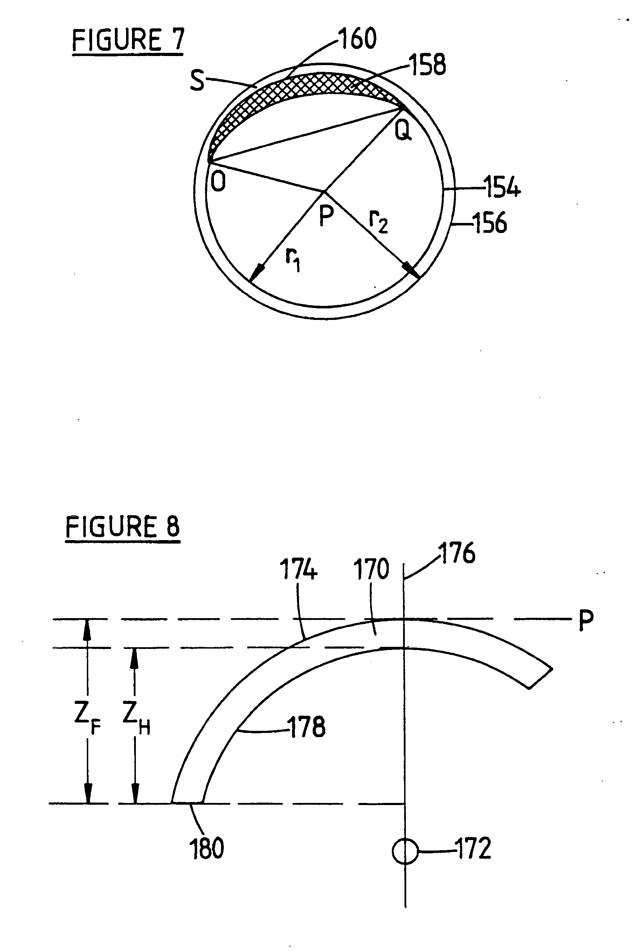

In other alternatives, the lens element or a surface is constrained to lie within a spherical, shell. This geometry is illustrated in Figure 7. Two concentric spheres, 154 and 156 are defined by a center at Point P and two radii $r_1$ and $r_2$ where $r_2 > r_1$. Together, the spheres define a shell S. A lens 158 is shown having a nasal-most edge point Q and a temporal-most edge point O. A front surface 160 of the lens lies within the shell S.

A front surface of the optical lens element may be a spherical, toric or rotationally symmetric aspheric surface. In order to improve vision further, the front and/or back surface of the optical lens element may deviate from a spherical form to provide improved optical performance and/or cosmetic appearance. The front and/or back surface, as described above, may be derived by the solution of the optimization problem to minimize a selected merit function representing a measure of optical aberrations seen by the wearer of the lens. The correction may alternatively, or in addition, improve the cosmetic appearance of the lens element Alternatively the surface within the shell may be a multi-focal progressive lens as described in greater detail below.

In a preferred embodiment, the lengths of radii $r_1$ and $r_2$ differ by no more than 2 mm, and in a more preferred embodiment one of the radii is about 33 mm and the difference in the lengths of the $r_1$ and $r_2$ is about 1 mm or less. The front surface subtends an angle OPQ greater than 75°, preferably greater than 90° and more preferably greater than 100°. This angle is a measure of the wide field of view provided by the lens.

Alternatively, the lens may be defined to lie entirely within a shell defined in a manner similar to the shell S of Figure 7, where the difference in length of $r_1$ and $r_2$ is less than 6 mm.

Additionally and alternatively, the lens may be defined as containing a portion of a steeply curved sphere such as the portion OQ of the sphere having radius $r_1$ in Figure 7. The reference sphere may be a sphere which lies intermediate the front and back surfaces of the lens element. This steeply curved sphere may define abutting surfaces of two lens wafers otherwise made in accordance with United States Patent No. 5.187, 505. In such a case the ophthalmic lens or lens blank is formed as a laminate of back and front wafers. Because the abutting surfaces of the wafers are spherical, it will be understood that the wafers may be rotated to achieve the desired orientation of a cyl correction applied to one of the surfaces. This is particularly useful in providing progressive lenses.

Other aspects of the geometry of the lens elements are illustrated in Figure 8. A lens 170, with a steep spherical curvature, approximately concentric with the centroid 172 of rotation of the eye, is shown. The fronto-parallel plane P is tangent to a spherical front surface 174 of the lens. The optical axis 176 of the lens is normal to the plane P and passes through the centroid of rotation of the eye. A back surface is identified by the numeral 178. The lens extends in a temporal direction to a temporal edge 180. The geometry of the lens is defined in part by a hollow depth $Z_H$ which is the perpendicular distance between the back surface 178 of the lens at the optical axis and the edge 180. A related dimension $Z_F$, is the distance between the fronto-parallel plane P and the edge 180.

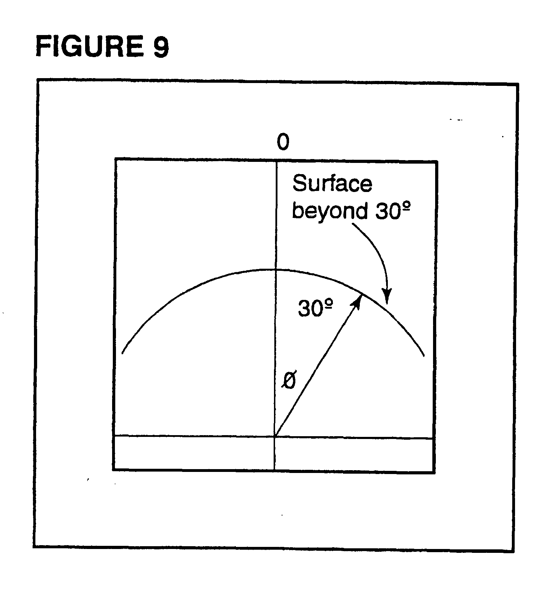

It is instructive to consider the peripheral optical properties of the lenses, such as distortion. In such cases, reference may be made as shown in Figure 9 to lens properties lying inside or outside of a cone of half angle Φ centred on an optical axis 0. In Figure 9, θ is shown as a 30° angle. In a preferred embodiment, the lens element of the series has a surface astigmatism of less than .125 D through a cone defined by an angle θ of at least 25°.

A lens element may be such that for foveal vision the RMS Power Error (defined below) is less than 3/8 D for eye rotation angles less than 30°. Moreover the lens element may be such that for foveal vision the RMS Power Error is less than 1/2 D for eye rotation angles greater than 30° and less than 40°. Finally, the lens element may be such that for foveal vision the RMS Power Error is less than 3/4 D for eye rotation angles greater than 40° and less than 50°.

In preferred embodiments, the lens element may be configured such that for peripheral vision where the eye Is rotated and fixated at an angle of 30° temporally the RMS Power Error is less than 3/8 D for angles ± 5° of the fixated position; the RMS Power Error is less than 0.65 D for angles ± 10° of the fixated position; and the RMS Power Error is less than 1.0 D for angles ± 30° of the fixated position.

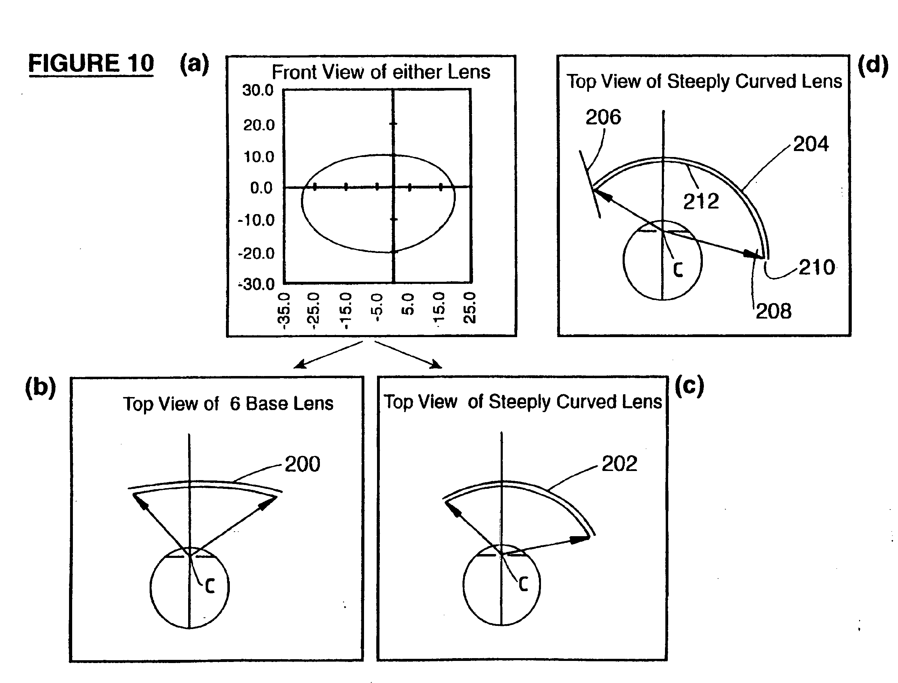

Certain features of the present lens and a comparison with a conventional lens are illustrated in Figure 10. Figure 10(a) illustrates a plan view outline selected for a conventional lens and a steeply curved spherical lens. A conventional 6 D base lens 200 is shown in Figure 10(b) and a 16 D base lens 202 in Figure 10(c), both having the same plan outline as in Figure 10(a). The apparent field of view is measured between edge rays centred on the centre C of the pupil in the pupillary plane. The conventional base 8 lens 200 has an apparent field of view of about 105° while the lens 202 has an apparent field of view of about 130°. If a larger lens blank and plan outline are employed, a 16 D base lens 204 of the approximate size of Figure 10(d) may be produced. Such a lens may extend horizontally from the nasal margins 206 to the temporal margins 208 of the orbital region producing an apparent field of view of about 170°.

Such a lens would have no temporal edge which could be seen by the wearer when gazing straight ahead. Moreover, the temporal lens edge thickness 210, would not be readily observed by other people because it curves in a posterior direction, thus improving the cosmetic appearance of the lens. Finally, the rear surface 212 of the lens would clear eyelashes of normal length for a broad range of prescriptions.

## II Correction Of Astigmatism

Steeply curved spherical lenses present particular problems when a cyl correction is part of the wearer's prescription. Common toric back surfaces may not provide acceptable performance. In particular, conventional torics do not work very well at the periphery of steeply curved lenses.

The ideal back surface for a cyl Rx (neglecting things like ray obliquity) would have a constant surface astigmatism appropriate for the prescription. No such surface exists. Toric surfaces are a manufacturable approximation to this ideal. There are two standard types of toric surfaces, sometimes referred to as donut torics and barrel torics. Each is made by sweeping a circular arc around a fixed axis. If the radius of the circle is smaller than its maximum distance to the fixed axis then it is a donut toric, otherwise it is a barrel toric. Both types of torics have circular cross sections along the two principal meridians. Because of this (and symmetry) the tangential power is correct everywhere along these meridians. In addition each type of toric has a "preferred" meridian where the sagittal power is correct. For the donut toric it is the lower tangential power meridian, for the barrel toric it is the higher tangential power meridian. Zero tangential and sagittal errors means the surface astigmatism is identically zero along the preferred meridian.

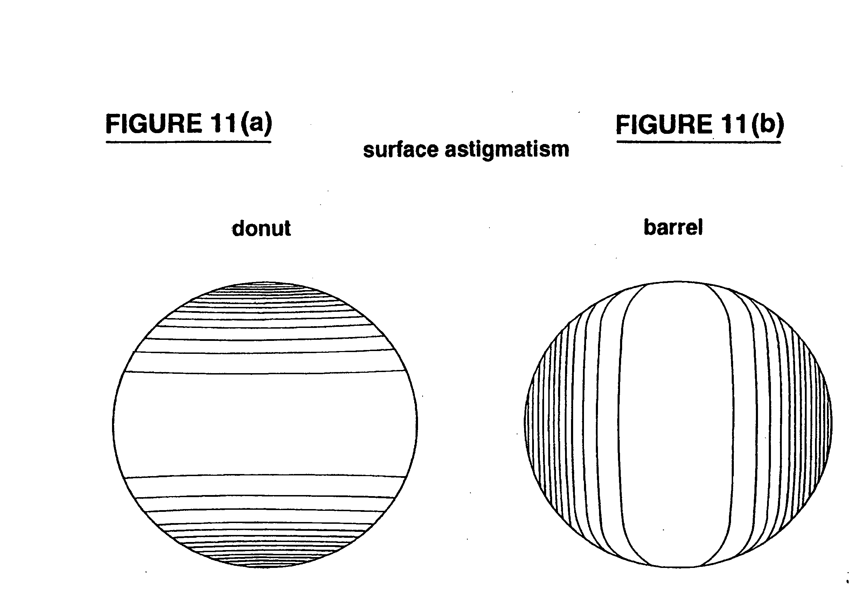

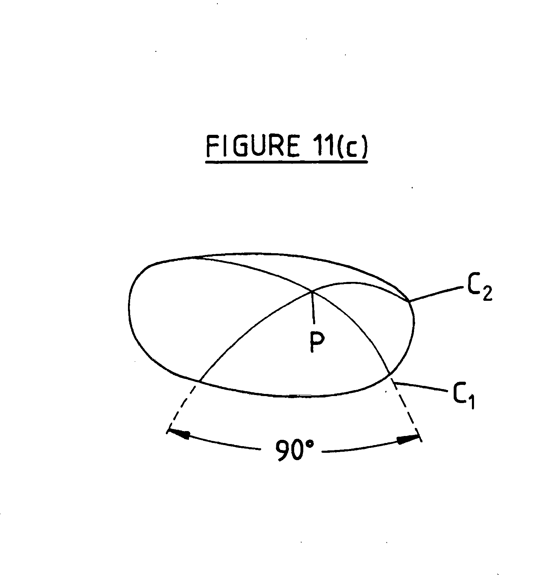

Examples of conventional torics in steeply curved lenses are shown in Figures 11 (a) and (b). Both examples have a tangential power of 18 dioptres (@ n= 1.530) on the equatorial 180 degree meridian and 20 dioptres at 90 degrees, for a nominal 2 cyl. The plots are 45 mm in diameter and have 0.1 dioptre contours. Circular principal meridional curvatures C1 and C2 are shown pictorially in Figure 11(c). C1 and C2 intersect at a central point at the pole P at an angle of 90°. It will be understood that other "non-principal" meridia may be defined radiating from the central point.

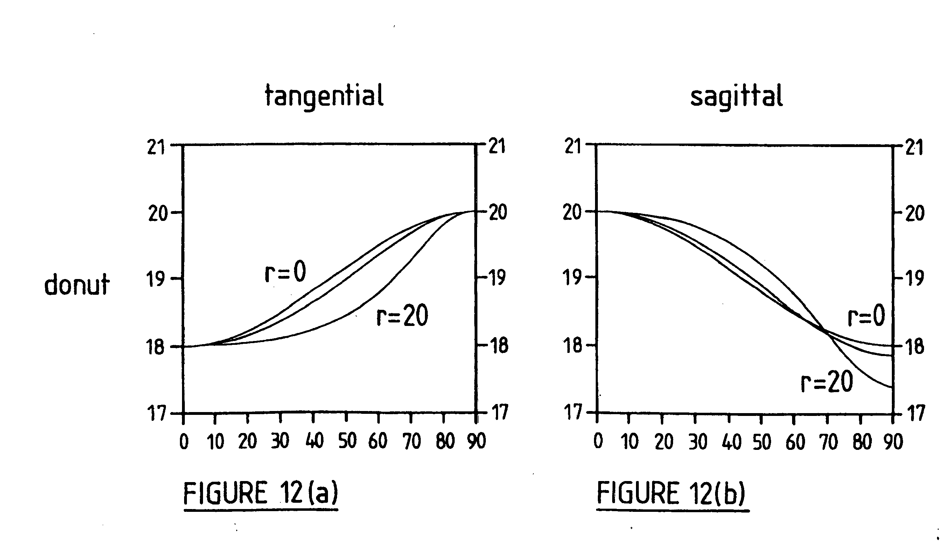

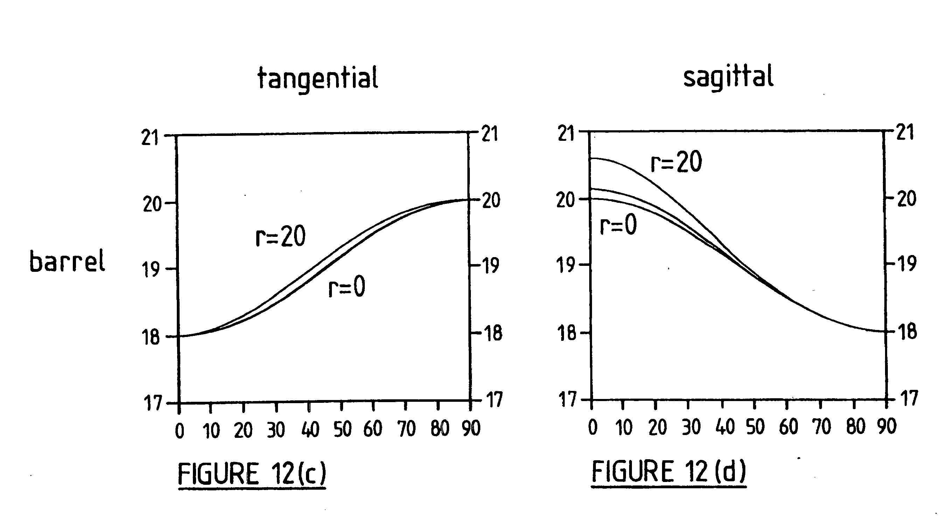

The preferred axis is obvious from the plots of Figure 11. The tangential and sagittal surface power for angles 0 to 90 degrees around radii 0, 10, and 20 mm from the center are shown in Figures 12(a)-(d).

From the Figures it may be noted that the donut and barrel torics both have the correct tangential power at 0 and 90 degrees for all radii. The donut toric has the correct sagittal power at 0 degrees, but an error at 90 degrees that increases with radius. The barrel toric has the correct sagittal power at 90 degrees and errors that increase with radius at 0 degrees.

There is something obviously asymmetrical about both of these torics; they each have a preferred meridian. There are, however, functions that preserve the correct tangential powers along the main meridians but treat the sagittal powers more symmetrically. One way to construct a function with the desired tangential behaviour is to force the cross section along every meridian to be circular. The function would have the form

$$z(r, \theta) = R(\theta) - \sqrt{R(\theta)^2 - r^2}$$

Where R($\theta$) is the radius of curvature along the $\theta$ Meridian, and $r = \sqrt{x^2 + y^2}$. The values of R(O) and R(90) are fixed by the desired tangential powers and the powers at intermediate angles are determined by interpolating between these end values. A form for the interpolation comes from the recognition that the form of the above power profiles are nearly sinusoidal. So a good first approximation for the R($\theta$) would be

$$P(\theta) = P(0) + (P(90) - P(O))(1 + \cos 2\theta) / 2, \text{ and } R(\theta) = (n-1) / P(\theta)$$

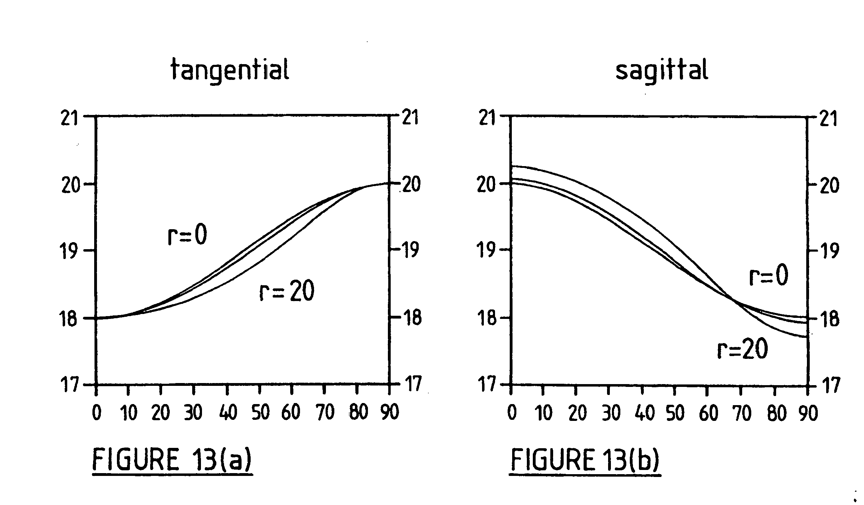

where P is the tangential power and n is the index of refraction needed to convert power to curvature. To add more control over the sagittal behaviour, more Fourier terms could be added to the interpolation. For more control over the tangential behaviour the power could be made polynominal in r. For a simple surface no extra degrees of freedom would be required. The plots of Figure 13 show the tangential and sagittal powers as a function of angle as shown above for the torics. Notice that the tangential errors at intermediate angles are less than the donut and greater than the barrel torics. Notice also that the sagittal power is corrected at 0° and 90° for r = 0 but starts missing on both meridia, more or less symmetrically, as the radius increases. For a surface that is not axially symmetric there is a weak contribution from the angular behaviour on the tangential curvature. This is because the normal vector is not in the same plane as the circular cross section.

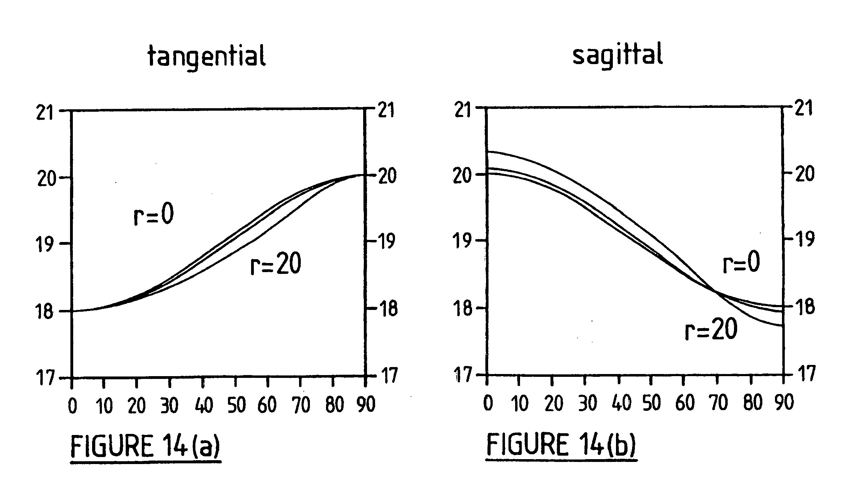

Another way to produce an "unbiased" cyl correction surface is to average the conventional donut and barrel torios together. Doing this gives results that are similar to those for the surface constructed from circular meridians. The angular plots for the averaged torics are shown in Figure 14 in which $Z = a_B Z_B + (1-a_B)Z_D$ where Z is the surface height of the lens, $Z_B$ is the surface height of a conventional barrel toric; $Z_D$ is the surface height of a conventional donut toric; and $a_B$ is a weighting factor such that $1 > a_B > 0$. Figure 14 shows the specific case for $a_B = 0.5$.

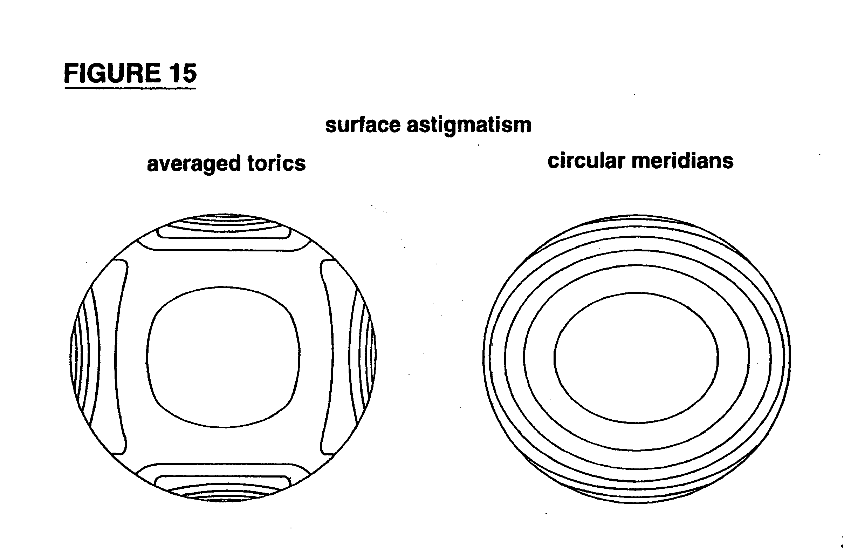

It is difficult to tell from the plots of Figure 14, but there are significant differences in the angular behaviour of the tangential and sagittal powers for these circular meridia and averaged toric surfaces. The contour plots of Figure 15 compare the surface astigmatism of the averaged torics and the circular meridian functions. The plots have the same 0.1 dioptre contours and 45 mm diameters as before.

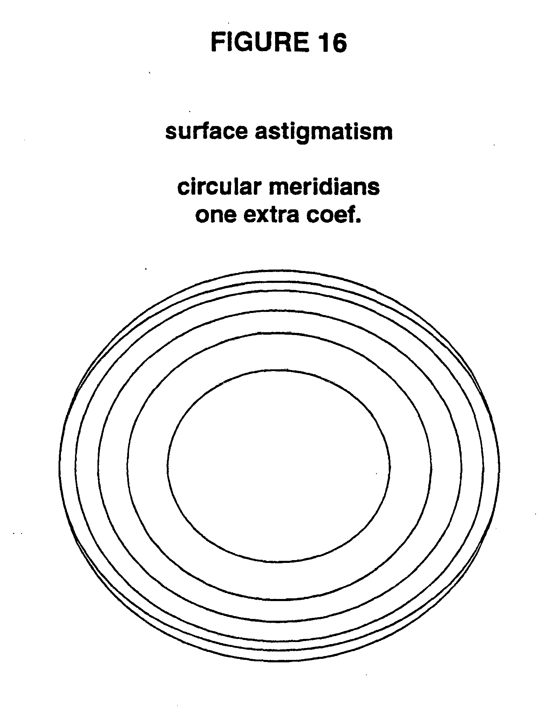

The astigmatism behaves more simply for the circular meridian surface than for the averaged torics. To show the effect of adding Fourier terms to the angular interpolation, one extra coefficient can be adjusted to "round out" the elliptical looking contours. The results are shown in Figure 16, Note that the meridians still all have circular cross sections, only the angular interpolation has been changed slightly.

The circular meridia and average toric surfaces have additional properties of note. The surface astigmatism of the surface at any point off the principal meridia is less than the larger of the surface astigmatism of the barrel toric or the donut toric at the same point. In addition, the average toric or circular meridia surfaces lie between (have an intermediate Z value) between the barrel toric and the donut toric of the same prescription.

While the foregoing torics are preferred for use as back surfaces for lenses of preferred embodiments of the present invention, it is possible to use conventional torics or generalized torics to provide for the lens.

Alternatively surface correction for lens elements of the present invention may be provided by producing a back surface in accordance with the following mathematical description of a symmetric polynomial:

$$z = \sum_{k=0,2...}^{n} \sum_{j=0,2...}^{k} C_{k-j,j} x^{k-j} y^{j} \; ;$$

A number of measures of optical aberrations of a lens are defined as follows

$$\text{Mean Power Error (MPE)} \quad = \quad \frac{\varepsilon_{11} + \varepsilon_{22}}{2}$$

$$\text{Cyl Error} \quad = \quad \left( (\varepsilon_{11} - \varepsilon_{22})^2 + 4\varepsilon_{12}^2 \right)^{1/2}$$

$$\text{RMS Power Error (RMS blur)} \quad = \quad \left( \frac{\varepsilon_{11}^2 + 2\varepsilon_{12}^2 + \varepsilon_{22}^2}{2} \right)^{1/2}$$

$$= \quad \left( (mpe)^2 + \frac{1}{4}(cyl\ error)^2 \right)^{1/2}$$

where $\varepsilon$ is the focal error matrix and may be written

$$\varepsilon = \begin{pmatrix} \varepsilon_{11} & \varepsilon_{12} \\ \varepsilon_{21} & \varepsilon_{22} \end{pmatrix}$$

where $\varepsilon_{12} = \varepsilon_{21}$ by the choice of the orthornormal basis set.

Where these terms are calculated by considering specifically the optical properties of the lens, the terms Optical Mean Power Error, Optical Cyl Error and RMS Optical Power Error apply.

The merit function(s) may be selected from the following functions depending on the specific application of the optimized lens:

$$M_1 = \sum_\theta (rms\ blur)_\theta^2$$

$$M_2 = \sum_\theta \left((mpe)^2 + (cyl\ error)^2\right)_\theta$$

$$M_3 = \sum_\theta \left(\frac{1}{16}(mpe)^2 + (cyl\ error)^2\right)_\theta$$

$$M_4 = \overset{horizontal}{\sum_\theta}(\varepsilon_{11})_\theta^2 + \overset{vertical}{\sum_\theta}(\varepsilon_{22})_\theta^2 + \overset{oblique}{\sum_\theta}(mpe)_\theta^2$$

$$M_5 = \sum_\theta \left((mpe)^2 + \frac{1}{16}(cyl\ error)^2\right)_\theta$$

where summations are over a number of sample eye rotations $\theta$.

In the case of $M_4$, there are different blur measures used depending upon whether the sample point $\theta$ represents a horizontal, vertical, or oblique rotation from the "straight ahead" position. This mode may provide some generalization of the aspheric "minimum tangential error" design strategy.

The modes $M_3$ and $M_5$ represent "minimum astigmatic error" and "minimum mean power error" strategies respectively.

In a still further embodiment, a term may be included in the merit function that represents the cosmetics of the lens. For example, instead of using M alone., a modified merit function may be defined by

$$M^* = M + \eta_\theta \lambda^2 \left(\frac{V}{\pi r^2}\right)^2$$

where $\eta_\theta$ denotes the number of sample eye rotations $\theta$ considered in M, r is a specified lens radius, and V is the lens volume out to the radius r. The factor $\lambda$ is seen to be weighting on the average lens thickness.

**III Reduction Of Magnification And Distortion**

Spectacle lenses either minify or magnify objects viewed through them. This occurs because the principal planes of conventional spectacle lenses are located close to the lens and do not coincide with the entrance pupil of the eye. In general, plus power lenses make things look bigger, and minus power lenses make things look smaller. Magnification also changes the perceived direction of objects in the peripheral field, and causes the apparent field of view to differ from the true field of view through the lens.

In addition to magnification, spectacle lenses also distort the shape of objects viewed through them. For an eye looking straight ahead, minus lenses create so-called "barrel distortion" in which rectangular objects appear compressed in the periphery so that squares look like barrels. Conversely, plus powered lenses create "pincushion distortion" which stretches out the corners of the squares.

The two effects add together to degrade the perception of object size, shapes, and position. Textbooks on ophthalmic optics teach that it is not practical to correct distortion in spectacle lenses, and are silent about the desirability of reducing magnification effects. Yet one of the touted visual advantages of contact lenses is that the close fit of the lens to the eye reduces magnification and distortion effects, allowing a more natural correction of vision. It would seem desirable to reduce the magnification and distortion of spectacle lenses if it is possible.

**Relative Spectacle Magnification**

For a distant object, the magnification effect is defined by the following equation:

$$Re\,lativeSpectacleMagnification \cong \left( \frac{1}{1 - dF_v'} \right)\left( \frac{1}{1 - \dfrac{tF_1}{n}} \right)$$

where d ($d_v$ in Figure 3) is the distance from the back surface of the lens to the entrance pupil of the eye, $F_v$ is the back vertex power in diopters, t is the thickness in meters, n is the index of refraction, and $F_1$ is the front surface power in diopters.
The part of the equation inside the first set of brackets is often called the "Power Factor" because it shows how much magnification is due to the lens power. If d could be equal to zero, then the power factor would be equal to 1. In other words, a lens in contact with the eye would have very little magnification due to its power, and this is what happens with contact lenses. Spectacle lenses are positioned away from the eye to avoid contact with the eye, eyelids, or eyelashes so this term is greater than 1 for plus lenses and less than 1 for minus lenses. In other words, plus power spectacle lenses tend to magnify and minus lenses tend to minify. According to context, the term "magnification effects" are used to describe both magnification and minification.
The part of the equation inside the second set of brackets is usually called the "Shape Factor" because it shows how magnification varies with the thickness and curvature of the lens. If lenses had no thickness, then t would equal zero and this term would be equal to 1. The ideal "thin lens" of third order optics would not have any magnification effect due to shape. Contact lenses come close to approximating this condition because they can be made extremely thin. Spectacle lenses do have a significant thickness to avoid breakage and always have positive front surface curvatures, so this term always is greater than 1. In other words, all positive meniscus spectacle lenses tend to magnify due to their shape.
To eliminate magnification effects, the equation must be set equal to 1, so the product of the power and shape factors must be equal to 1. Since both the power factor and shape factor in plus lenses are each greater than one, their product cannot equal 1, so no plus lens in a positive meniscus form can ever be free from magnification. On the other hand, minus lenses have power factor less than 1 and a shape factor greater than 1, so it is possible to force these factors to cancel.
To do this, we must solve this equation for unit magnification. After doing so we get the following relationship:

$$t = -\frac{ndF_v}{F_1\left(1 - dF_v\right)} \qquad (1)$$

This equation specifies the lens thickness which eliminates spectacle magnification effects. It works by placing the second principal plane of the lens at the entrance pupil of the eye. Achieving this in a practical thickness requires two things: a minus lens power and very steep curves.

**Distortion**

According to third order theory, distortion can only be eliminated within -lenses so steeply curved as to be impracticable. Jalie, M. The Principles of Ophthalmic Lenses 4th Edition p. 461.
Third Order theory in fact requires back surface curves in excess of 35 Diopters, which would be nearly concentric around the entrance pupil of the eye; such surfaces indeed would be impractical. A truly concentric lens design which has both surfaces concentric around the entrance pupil of the eye would have no distortion at all because the symmetry of the lens would ensure that all bundles of rays from oblique objects would encounter the same surface slopes as do those from central objects. While concentricity about the entrance pupil does require extremely steep curves, we have found that somewhat flatter curves also drastically reduce distortion when they are combined with lenses which have principal planes located close to the entrance pupil. This occurs with lenses designed to reduce minification in minus power lenses, and result in lenses which are more nearly concentric around the centroid of rotation of the eye.
In fact, it is highly desirable to make the lens concentric about the center of rotation of the eye, because this will improve the symmetry of the lens for the eye as it turns to view objects in the peripheral field, resulting in improved resolution. If we strictly require that one surface of the lens be concentric around the centroid of rotation of the eye, we can derive a thickness which virtually eliminates distortion. In this case, a special form of the equation for lens thickness is required.

For example, in a lens which has its front surface concentric around the centroid of rotation of the eye, we can solve for t in terms of the radius of the front surface, fitting distance, the index of refraction, the back vertex power, and the distance of the entrance pupil from the center of rotation of the eye. In this case

$$t = \frac{[F_v(r_1 - K_e + k_1) - 1] + \sqrt{(F_v(r_1 - K_e + k_1) - 1)^2 - 4F_v^2 d_f k_1}}{2F_v}$$

where (2)

$$k_1 = \left(\frac{nr_1}{n-1}\right)$$

is a lens shape factor, $r_1$ = radius of front surface; $d_f$ = distance from the front lens surface to the plane of the entrance pupil; and $K_e$ is the distance from the center of rotation of the eye to the entrance pupil of the eye as shown in Figure 3.

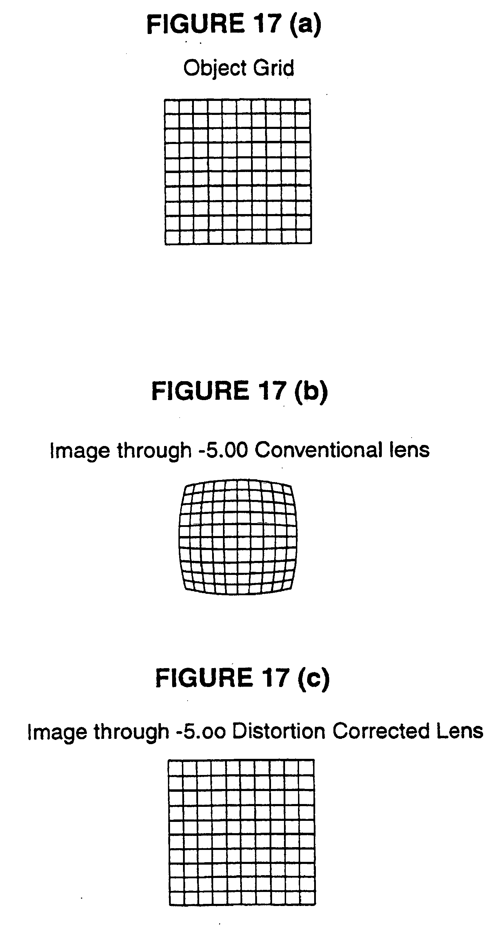

Figures 17(a)-(c) show the advantage of this kind of design. Figure 17(a) is a representation of a large grid to be viewed from a great distance, such that the grid extends 45 degrees to the left and right of the viewer. Figure 17(b) is a calculated image of what a person wearing a conventional -5.00 D lens would see: the grid appears smaller and distorted in shape. Figure 17(c) shows the calculated image seen by a person wearing a lens designed to eliminate distortion according to the previous equations. The image appears almost identical to the original object.

**IV Lens Manufacture**

Ophthalmic lens elements according to the present invention may be formulated from any suitable material. A polymeric material may be used. The polymeric material may be of any suitable type. The polymeric material may include a thermoplastic material such as polycarbonate or thermoset material such as diallyl glycol carbonate type, e.g. CR-39 (PPG industries) may be used.

The polymeric article may also be formed from cross-linkable polymeric casting compositions, for example as described in United States Patent 4,912,155 or United States Patent Application Serial No. 07/781,392.

The polymeric material may include a dye, including, for example, a photochromic dye, which may be added to the monomer formulation used to produce the polymeric material.

The optical lens element according to the present invention may further include standard additional coatings to the front or back surface, including electrochromic coatings. The front lens surface may include an anti-reflective (AR) coating, for example of the type described in United States Patent 5,704,692. To make sun lenses or to provide a desired cosmetic effect, a partially reflective coating may be applied to the lens. The front lens surface may alternatively or additionally include an abrasion resistant coating, for example of the type described in United States Patent 4,954,591.

The front and back surfaces may further include one or more surface treatments conventionally used in casting compositions such as inhibitors, dyes including thermochromic and photochromic dyes, for example as described above, polarizing agents, UV stabilizers and materials capable of modifying refractive index.

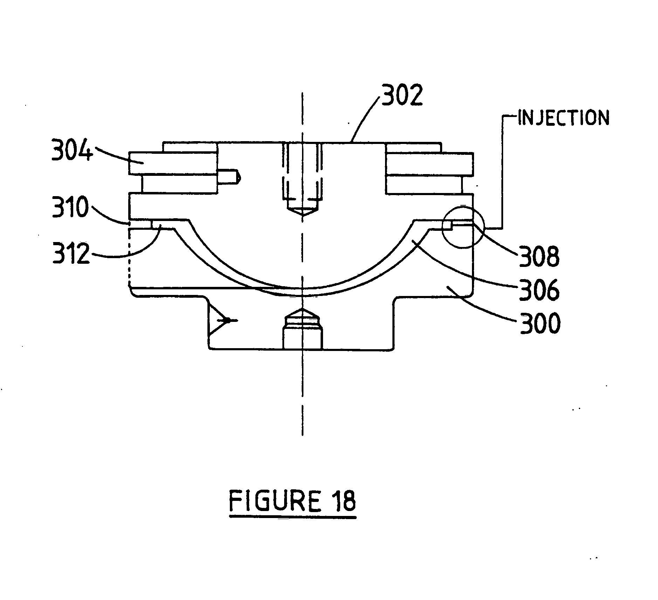

Figure 18 illustrates a mold suitable for making a lens element in accordance with teachings of the present invention. The mold includes a front mold portion 300, a back mold portion 302 and closure flange portion 304. The lens element may be formed in the cavity 306 between the mold halves by injecting liquid lens material through port 308. Air escapes through port 310. When the lens element is hard, the mold halves are separated. It will be observed that the lens element as it leaves the mold will have a radial flange 312, which may be removed in later processing.

**V Calculated Performance Of Lens Design Examples**

**Example 1**

Table 1 shows a comparison of the calculated performance of a polycarbonate lens made in accordance with the present invention and a conventional low base curve lens.

| | Concentric form | Conventional |
|---|---|---|
| Index of refraction | 1.586 | 1.586 |
| Power | -3.00 | -3.00 diopters |
| Thickness | 2.0 | 2.0 in mm |
| Front Surface Curvature (1.530 tooling index) | 16.00 | 4.00 diopters |
| Front Surface Radius | 33.1 | 132.5 mm |
| Optical power of front surface | 17.7 | 4.4 diopters (higher due to 1.586 index) |
| Paraxial Magnification | 0.97 | 0.96 |
| Apparent field of view | 130 | 105 in degrees, for the edge outline of Figure 10(a) |
| Optical Values at 30 degree eye rotation: | | |
| Distortion | -1.10% | -3.10% |
| Astigmatism | 0.02 | 0.17 diopters |
| Mean Power Error | 0.07 | 0.025 diopters |
| RMS Power Error | 0.07 | 0.09 |
| Chromatic Aberration | 0.11 | 0.16 prism diopters |

**Example 2**

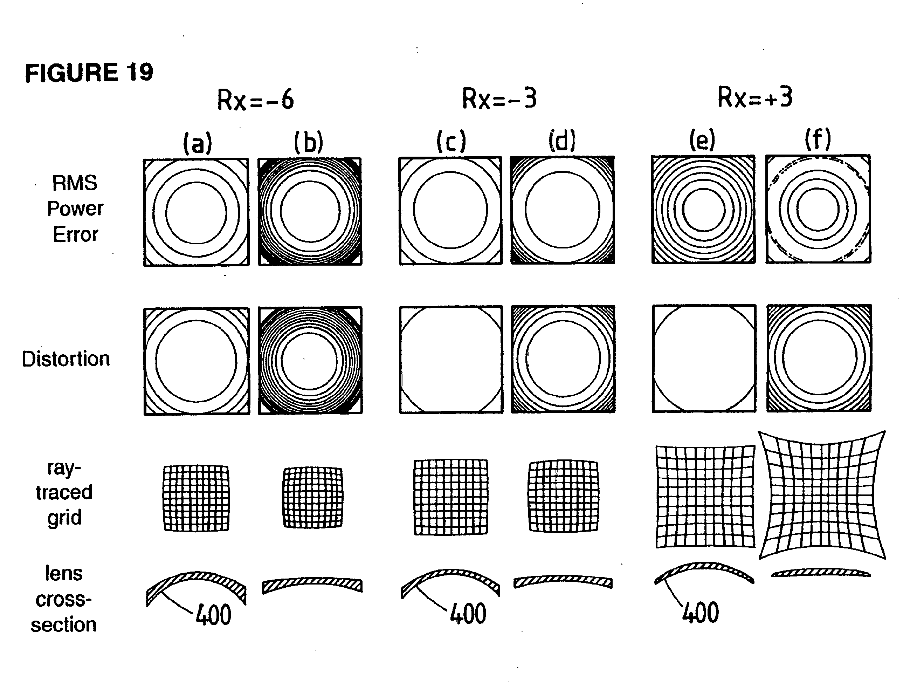

Figure 19 illustrates a calculated comparison between a series of steeply curved spherical lens elements of -6 D, -3 D and +3 D power [Figures 19(a), (c) and (c), respectively] with corresponding low base curve Sola Perma-Poly™ stock lenses [Figures 19(b), (d) and (f), respectively].

The steeply curved spherical lens elements have essentially identical, spherical front surfaces of 16 D as shown in the lens cross sections 400. Generally, the steeply curved spherical lens elements provide superior peripheral distortion. The lenses of Figures 19(a) and 19(c) also exhibit reduced RMS power error in the minus prescriptions.

**Example 3**

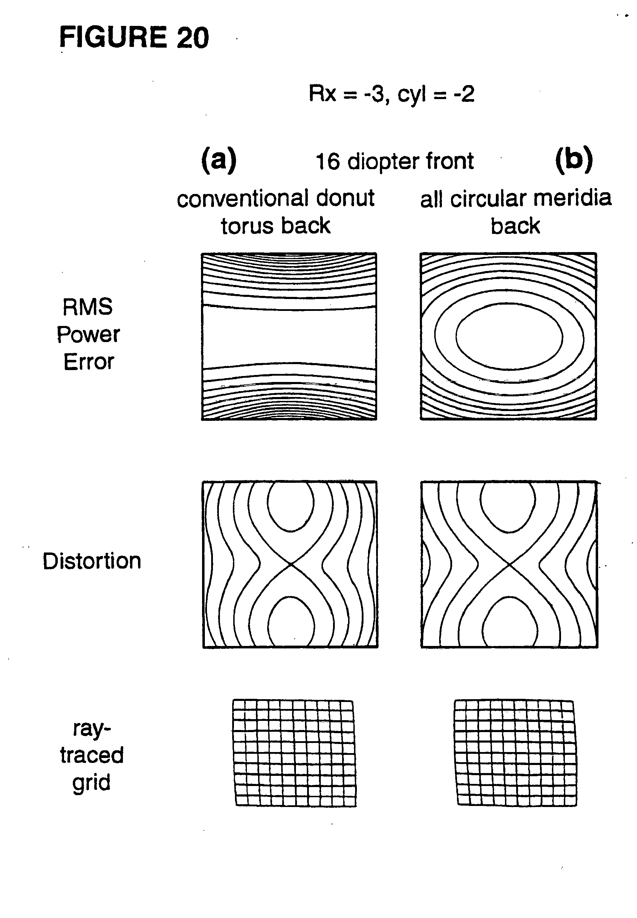

Figure 20 illustrates a calculated comparison between two steeply curved spherical lens elements with a 16 D front surface -3 D through power and a back surface-cyl correction of -2.

The lens of Figure 20(a) has a conventional donut torus back; the lens of Figure 20(b) has an all circular meridia back of the type described above. The latter exhibits superior RMS power error and somewhat improved distortion.

**Example 4**

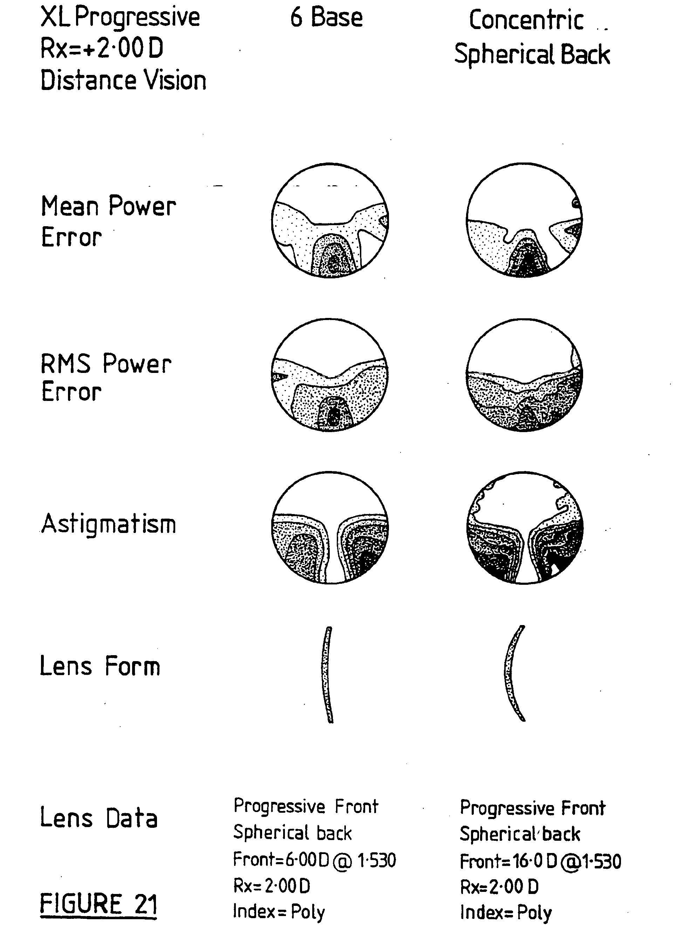

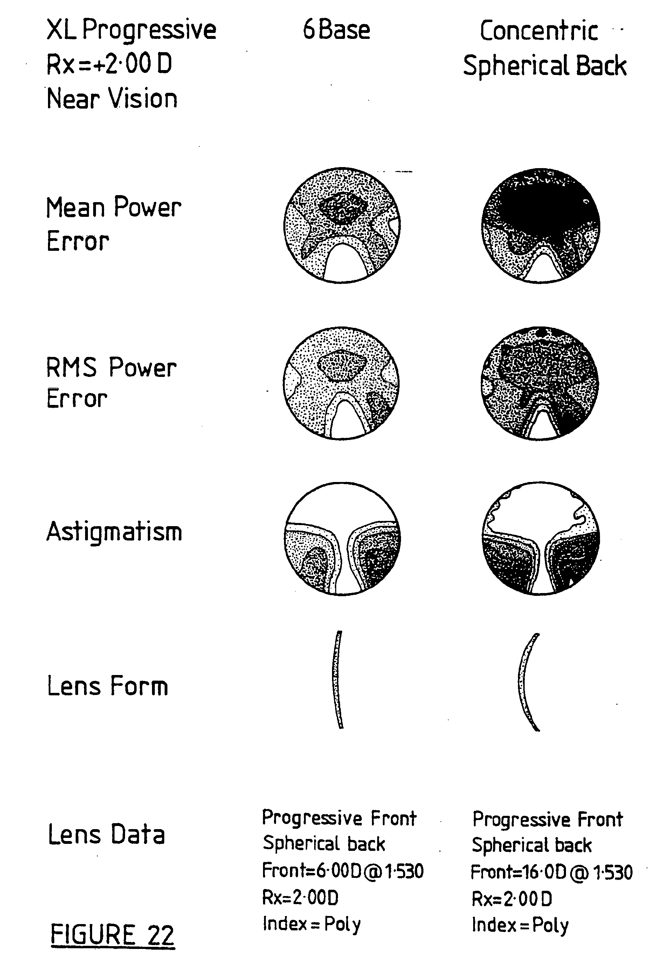

The final set of examples (Figures 21 and 22) are a calculated comparison between a conventional base curve progressive lens and a progressive lens according to the present invention.

Figure 21 compares distance vision properties of a conventionally curved Sola XL progressive lens, with a lens in which a similar progressive form is placed on a lens element with steeply curved (16 D) base curve.

Figure 22 compares near vision properties of the Sola XL progressive lens with the steeply curved lens of Figure 21.

Generally speaking, progressive lenses made in accordance with the present invention are characterized by a steeply curved reference sphere or spherical shell approximately concentric with the centroid of rotation of the wearer in the as worn position. Such lenses have an upper viewing zone for distance vision; a lower viewing zone, having a greater power than the upper viewing zone for near vision and an intermediate zone connecting the upper and lower zones, with power varying between the upper and lower zones, including a corridor of relatively low surface astigmatism.

In one embodiment the steeply curved reference sphere corresponds to the front surface of the central part of the upper viewing zone. In another embodiment, the progressive surface is on the front surface of the lens and lies within a steeply curved spherical shell of thickness less than about 2 mm. In both embodiments the radius of curvature of the shell or reference sphere may be less than 50 mm, preferably between about 30 and 35 mm, most preferably about 33 mm ± about 2 mm. Suitable front surface designs for progressive lenses are illustrated for example in applicant's patent application Serial No. 081782,493 filed July 10, 1997, now United States Patent No. 5861935A.

**VI Glazed Lenses And Spectacle Frames**

Spectacle frames for use in the present invention are adapted to hold lenses of the present invention in the approximate positions shown in Figure 3. The spectacle frame may be rimless, partial rim or full rim.

In preferred embodiments the lenses, when mounted in the spectacle frame, exhibit essentially no tilt or wrap angle. The spectacle frame may include an adjustable mechanism for altering the positions of the optical axes of the lens to correspond to the axes of straight-ahead vision of the wearer.

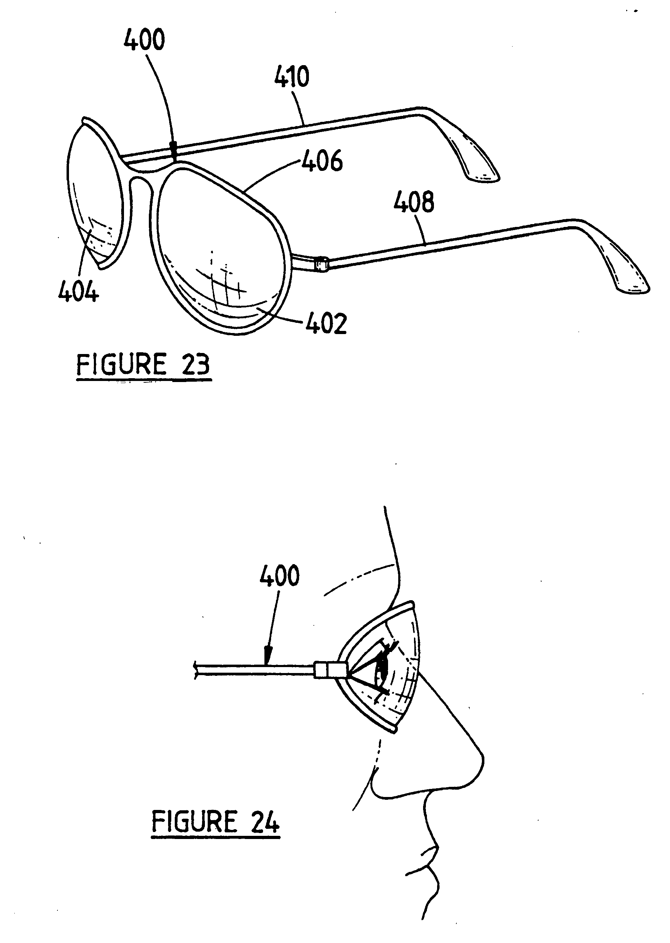

Figure 23 is a perspective view of eyewear 400 including lenses 402 and 404 and spectacle frames of the present invention. The lens shape creates a cosmetically interesting object. The spectacle frame in Figure 23 is shown with a rim portion 406 and temple pieces 408 and 410. The rim of the spectacle frame surrounding each lens is adapted to correspond to a closed curve lying on or near the steeply curved reference sphere of the lens. Because of the consistency of this curvature through a range of prescriptions, a single frame or frame design may be fit to any prescription in the range.

Figure 24 is a side elevation of the eyewear of Figure 23 on the face of the wearer. The Figure illustrates another aspect of the visual appearance of the eyewear due to the steep curvature of the lens and the complex three-dimensional shape of the lens edge. The Figure also illustrates that a lens of relatively small size provides a wide field of view and good eye protection.

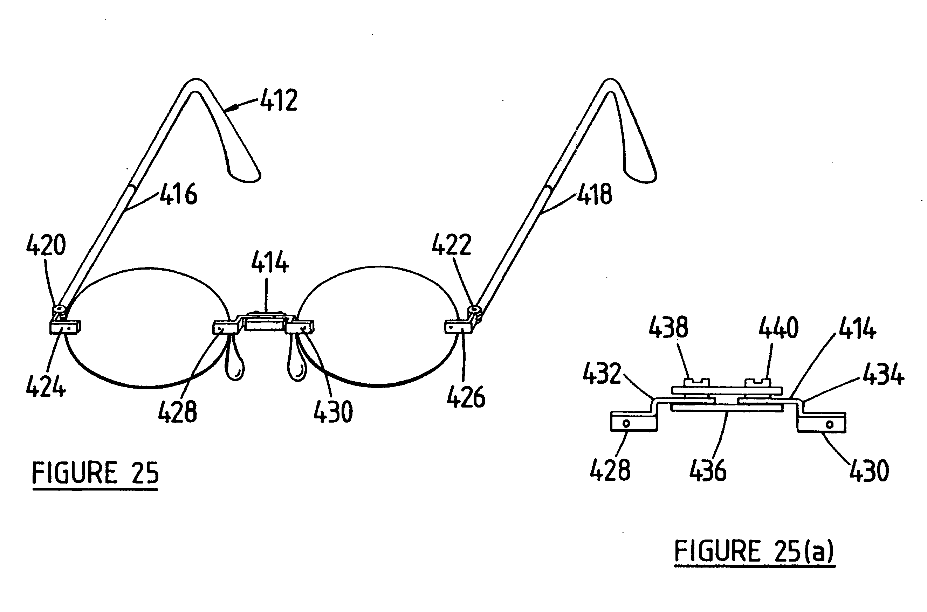

Figure 25 is a front pictorial view of eyewear embodiment 412 according to the present invention illustrating certain mechanical aspects of the invention. The spectacle frames of the embodiment of Figure 25 include a nose bridge 414 and hinged temple pieces 416 and 418. Together these components comprise a three-piece, rimless spectacle frame.

The temple pieces 416 an 418 include hinges 420 and 422, and mounting tabs 424 and 426. In a preferred embodiment, the tabs 424 and 426 are surface mounted onto the spherical front surfaces of the lenses. It will be understood that these mounting surfaces will have a consistent position and angular relation with respect to the frame, regardless of the prescribed through power and cyl correction of the lens. In a similar fashion, tabs 428 and 430 of the nose bridge 414 may be surface mounted on the respective front surface edges of the lens.

The nose bridge 414 is shown in cross-section in Figure 25(a). Advantageously, the nose bridge may be made an adjustable length to compensate for different pupillary distances ($P_D$ in Figure 3) commonly found in different wearers. This adjustable feature permits the optical axes of the lenses to be aligned with the axes of vision of both wearer's eyes. One mechanical structure suitable for producing this adjustable feature is shown in Figure 25(a), it being understood that other combinations of moving or flexible structures could be adapted to the purpose. In the embodiment of Figure 25(a), the tabs 428 and 430 are each carried by members 432 and 434, respectively, which are inserted into opposite ends of a tube 436. Set screws 438 and 440 hold the members 432 and 434 in position. The set screws may be loosened to permit adjustment of the length of the nose bridge by sliding the members 432 and 434 within the tube to different positions.

Accordingly, novel, high optical quality lens elements with steep spherical curvature are provided with prescribed through-power and cyl correction, and mounted in spectacle frames adapted for use therewith.

The present invention has been described in connection with various embodiments and examples. However, the invention to be protected is defined by the following claims and equivalents thereof recognized in law.

**Claims**

**1.** A series of ophthalmic lens elements (28, 30) each lens element having

a spherical front surface which is approximately concentric with the centroid of rotation (24, 26) of the eye (20, 22) in the as worn position;

approximately the same radius of curvature which is essentially a single value within about $\pm 1$ mm for the series and selected in the range 25 to 50 mm; and wherein the back surfaces of the lens elements in the series are configured to provide, in conjunction with the front spherical surface, various commonly prescribed through powers and astigmatic correction;

**characterized in that** the back surface lies between a barrel toroid and a donut toroid, both having the same principal meridia and the same power along said principal meridia.

**2.** An ophthalmic lens element series according to claim 1, wherein the lens elements have through powers of from at least approximately +4 D to -6 D.

**3.** An ophthalmic lens element series according to claim 1 or 2, wherein lens elements in the series are lens blanks or edged lenses having a back surface such that the lens element has a prescribed astigmatism correction and through power.

4. An ophthalmic lens element series according to claim 1, wherein the surface astigmatism of said back surface at any point off the principal meridia is less than the larger of the surface astigmatism of the barrel toroid or the donut toroid at the same point.

5. An ophthalmic lens element series according to claim 2, wherein the back surface is defined such that the surface height Z of the lens element from a fronto-parallel plane at any point on the back surface is a linear combination of the height of a barrel toroid, $Z_B$, and the height of the donut toroid $Z_D$, Z being bounded by the values of $Z_B$ and $Z_D$.

6. An ophthalmic lens element series according to any one of claims 1 to 5, wherein the barrel toroid and the donut toroid each have principal meridia defined by a cyl prescription of the wearer.

7. An ophthalmic lens element series according to claim 3, wherein the cross-section of the back surface of the lens element along any meridian is circular.

8. An ophthalmic lens element series according to claim 7, wherein the curvature of each circular meridian is equal to the instantaneous curvature of a corresponding meridian at the centre of a conventional torus given by the prescription.

9. An ophthalmic lens element series according to claim 7, wherein the back surface astigmatism correction is given by the surface height function z (r,θ) where

$$z(r,\theta) = R(\theta) - \sqrt{R(\theta)^2 - r^2}$$

and where

$$R(\theta) = \frac{R(0)R(90)}{R(0)\sin^2\theta + R(90)\cos^2\theta}$$

is the radius of curvature along the θ meridian, $r = \sqrt{x^2 + y^2}$, and the values R(0) and R(90) are the radii of curvature along the principal meridia.

**Patentansprüche**

1. Reihe von Augenlinsenelementen (28, 30), wobei jedes Linsenelement Folgendes aufweist:

   eine sphärische Vorderfläche, die in der Trageposition annähernd konzentrisch mit dem Rotationsschwerpunkt (24, 26) des Auges (20, 22) ist,
   annähernd den gleichen Krümmungsradius, der im Wesentlichen ein einziger Wert innerhalb von etwa ± 1 mm für die Reihe und in dem Bereich von 25 bis 50 mm ausgewählt ist, und wobei die Rückflächen der Linsenelemente dafür konfiguriert sind, in Verbindung mit der vorderen sphärischen Fläche verschiedene für gewöhnlich verschriebene Durchgangsbrechkräfte und astigmatische Korrektur zu gewährleisten,
   **dadurch gekennzeichnet, dass** die Rückfläche zwischen einem Zylindertorus und einem Donuttorus liegt, wobei die beiden die gleichen Hauptmeridiane und die gleiche Brechkraft entlang der Hauptmeridiane haben.

2. Reihe von Augenlinsenelementen nach Anspruch 1, wobei die Linsenelemente Durchgangsbrechkräfte von wenigstens ungefähr +4 dpt bis -6 dpt haben.

3. Reihe von Augenlinsenelementen nach Anspruch 1 oder 2, wobei die Linsenelemente in der Reihe Linsenrohlinge oder abgekantete Linsen sind, die eine Rückfläche haben derart, dass das Linsenelement eine verschriebene Astigmatismuskorrektur und Durchgangsbrechkraft hat.

4. Reihe von Augenlinsenelementen nach Anspruch 1, wobei der Oberflächenastigmatismus der Rückfläche an einem beliebigen Punkt außerhalb der Hauptmeridiane geringer ist als der größere von dem Oberflächenastigmatismus des Zylindertorus oder des Donuttorus an dem gleichen Punkt.

5. Reihe von Augenlinsenelementen nach Anspruch 2, wobei die Rückflüche derart definiert ist, dass die Oberflächenhöhe Z des Linsenelements von einer frontoparallelen Ebene aus an einem beliebigen Punkt der Rückfläche eine lineare Kombination der Höhe eines Zylindertorus, $Z_B$, und der Höhe des Donuttorus, $Z_D$, ist, wobei Z durch die Werte von $Z_B$ und $Z_D$ begrenzt wird.

6. Reihe von Augenlinsenelementen nach einem der Ansprüche 1 bis 5, wobei der Zylindertorus und der Donuttorus jeder Hauptmeridiane haben, die durch eine Cyl-Verschreibung des Trägers definiert werden.

7. Reihe von Augenlinsenelementen nach Anspruch 3, wobei der Querschnitt der Rückfläche des Linsenelements entlang eines beliebigen Meridians kreisförmig ist.

8. Reihe von Augenlinsenelementen nach Anspruch 7, wobei die Krümmung jedes kreisförmigen Meridians gleich der augenblicklichen Krümmung eines entsprechenden Meridians an dem Mittelpunkt eines herkömmlichen Torus, der durch die Verschreibung gegeben ist, ist.

9. Reihe von Augenlinsenelementen nach Anspruch 7, wobei die Rückflächen-Astigmatismuskorrektur gegeben ist durch die Oberflächenhöhenfunktion z(r,0), wobei:

$$z(r,\theta) = R(\theta) - \sqrt{R(\theta)^2 - r^2}$$

und wobei

$$R(\theta) = \frac{R(0)R(90)}{R(\theta)\sin^2\theta + R(90)\cos^2\theta}$$

der Krümmungsradius entlang des θ-Meridians ist, $r = \sqrt{x^2 + y^2}$ und die Werte R(0) und R(90) die Krümmungsradien entlang der Hauptmeridiane sind.

**Revendications**

1. Série d'éléments de lentille ophtalmiques (28, 30), chaque élément de lentille ayant une surface sphérique avant qui est approximativement concentrique avec le centre de rotation (24, 26) de l'oeil (20, 22) dans la position de port ; à peu près le même rayon de courbure qui est essentiellement une valeur unique à environ $\pm$ 1 mm près pour la série et sélectionnée dans la plage de 25 à 50 mm ; et dans laquelle les surfaces arrière des éléments de lentille de la série sont configurées pour fournir, conjointement avec la surface sphérique avant, divers pouvoirs continus et la correction astigmatique communément prescrits ;
**caractérisée en ce que** la surface arrière se situe entre un tore en barillet et un tore en pastille, tous deux ayant les mêmes méridiens principaux et le même pouvoir le long desdits méridiens principaux.

2. Série d'éléments de lentille ophtalmiques selon la revendication 1, dans laquelle les éléments de lentille ont des pouvoirs continus d'au moins environ +4 D à -6 D.

3. Série d'éléments de lentille ophtalmiques selon la revendication 1 ou la revendication 2, dans laquelle les éléments de lentille de la série sont des ébauches de lentilles ou des lentilles débordées ayant une surface arrière telle que l'élément de lentille ait une correction astigmatique et un pouvoir continu prescrits.

4. Série d'éléments de lentille ophtalmiques selon la revendication 1, dans laquelle l'astigmatisme de surface de ladite surface arrière en un point quelconque des méridiens principaux est inférieur au plus grand de l'astigmatisme de surface du tore en barillet ou du tore en pastille au même point.

**5.** Série d'éléments de lentille ophtalmiques selon la revendication 2, dans laquelle la surface arrière est définie de sorte que la hauteur Z de la surface de l'élément de lentille depuis un plan fronto-parallèle en un point quelconque sur la surface arrière soit une combinaison linéaire de la hauteur d'un tore en barillet $Z_B$ et de la hauteur du tore en pastille $Z_D$, Z étant délimitée par les valeurs de $Z_B$ et $Z_D$.

**6.** Série d'éléments de lentille ophtalmiques selon l'une quelconque des revendications 1 à 5, dans laquelle le tore en barillet et le tore en pastille ont chacun des méridiens principaux définis par une prescription cyl de l'utilisateur.

**7.** Série d'éléments de lentille ophtalmiques selon la revendication 3, dans laquelle la section transversale de la surface arrière de l'élément de lentille le long d'un méridien quelconque est circulaire.

**8.** Série d'éléments de lentille ophtalmiques selon la revendication 7, dans laquelle la courbure de chaque méridien circulaire est égale à la courbure instantanée d'un méridien correspondant au centre d'un tore classique donné par la prescription.

**9.** Série d'éléments de lentille ophtalmiques selon la revendication 7, dans laquelle la correction d'astigmatisme de la surface arrière est donnée par la fonction de hauteur de surface z(r,θ), où :

$$z(r,\theta) = R(\theta) - \sqrt{R(\theta)^2 - r^2}$$

et où :

$$R(\theta) = \frac{R(0)R(90)}{R(0)\sin^2\theta + R(90)\cos^2\theta}$$

est le rayon de courbure le long du méridien θ, $r = \sqrt{x^2 + y^2}$ et les valeurs R(0) et R(90) sont les rayons de courbure le long des méridiens principaux.

# FIGURE 1

A "Tscherning" ellipse

# FIGURE 2

PRIOR ART

## FIGURE 3

EP 1 105 768 B1

# FIGURE 4

**Morris - Spratt
Diagram**

**FIGURE 5**

EP 1 105 768 B1

## FIGURE 6 (b)

Side view - right lens

100

114

108

106

55.0  45.0  35.0  25.0  15.0  5.0  -5.0

30.0  20.0  10.0  0.0  -10.0  -20.0  -30.0

## FIGURE 6 (a)

Front view - right lens

100

102

104

25.0  15.0  5.0  -5.0  -15.0  -25.0  -35.0

30.0  20.0  10.0  0.0  -10.0  -20.0  -30.0

## FIGURE 6 (c)

Top view - right lens

## FIGURE 7

## FIGURE 8

# FIGURE 9

**FIGURE 10** **(a)**

Front View of either Lens

**(d)**

Top View of Steeply Curved Lens

206
204
212
210
208
C

**(b)**

Top View of 6 Base Lens

200

C

**(c)**

Top View of Steeply Curved Lens

202

C

EP 1 105 768 B1

FIGURE 11(a) donut

FIGURE 11(b) barrel

surface astigmatism

## FIGURE 11(c)

tangential

sagittal

donut

FIGURE 12(a)

FIGURE 12(b)

EP 1 105 768 B1

## tangential

## sagittal

barrel

FIGURE 12(c)

FIGURE 12(d)

EP 1 105 768 B1

tangential

sagittal

FIGURE 13(a)

FIGURE 13(b)

EP 1 105 768 B1

FIGURE 14(b)

sagittal

FIGURE 14(a)

tangential

# FIGURE 15

**surface astigmatism**

**averaged torics**  **circular meridians**

# FIGURE 16

**surface astigmatism**

**circular meridians
one extra coef.**

# FIGURE 17 (a)

Object Grid

# FIGURE 17 (b)

Image through -5.00 Conventional lens

# FIGURE 17 (c)

Image through -5.oo Distortion Corrected Lens

FIGURE 18

FIGURE 19

EP 1 105 768 B1

# FIGURE 20

Rx = -3, cyl = -2

**(a)**    16 diopter front    **(b)**

conventional donut
torus back

all circular meridia
back

RMS
Power
Error

Distortion

ray-
traced
grid

XL Progressive
Rx=+2·00 D
Distance Vision

6 Base

Concentric
Spherical Back

Mean Power
Error

RMS Power
Error

Astigmatism

Lens Form

Lens Data

Progressive Front
Spherical back
Front=6·00 D @ 1·530
Rx= 2·00 D
Index = Poly

Progressive Front
Spherical back
Front=16·0 D @1·530
Rx=2·00 D
Index= Poly

FIGURE 21

| XL Progressive<br>Rx =+2·00 D<br>Near Vision | 6 Base | Concentric<br>Spherical Back |
|---|---|---|
| Mean Power<br>Error | | |
| RMS Power<br>Error | | |
| Astigmatism | | |
| Lens Form | | |
| Lens Data | Progressive Front<br>Spherical back<br>Front=6·00D@1·530<br>Rx=2·00D<br>Index = Poly | Progressive Front<br>Spherical back<br>Front=16·0D @ 1·530<br>Rx=2·00D<br>Index = Poly |

FIGURE 22

400

410

406

404

408

402

FIGURE 23

400

FIGURE 24

FIGURE 25(a)

FIGURE 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1741536 A, Rayton
- US 5689323 A, Houston
- US 2543949 A
- US 5187505 A
- US 4912155 A
- US 07781392 B
- US 5704692 A
- US 4954591 A
- US 081782493 B
- US 5861935 A

**Non-patent literature cited in the description**

- **M. JALIE.** The Principles of Ophthalmic Lenses. 1994, 464